# EUROPÄISCHE PATENTSCHRIFT

(11) **EP 1 762 834 B1**
(45) Veröffentlichungstag und Bekanntmachung des Hinweises auf die Patenterteilung: **29.10.2008**
(21) Anmeldenummer: 06018758.0
(22) Anmeldetag: 07.09.2006
(51) Int. Cl.: G01N 1/12

(54) **Eintauchsonde für Metallschmelzen**
Immersion probe for molten metal sampling
Sonde à immersion pour échantillonnage de métal fondu

(30) Priorität: 13.09.2005 DE 102005043852
(43) Veröffentlichungstag der Anmeldung: 14.03.2007
(73) Patentinhaber: Heraeus Electro-Nite International N.V., 3530 Houthalen (BE)
(72) Erfinder: Knevels, Johan, 3960 Bree (BE); Truyen, Jos, 3941 Eksel (BE); Cappa, Guido, 3530 Houthalen (BE); Claes, Jean, 3670 Meeuwen (BE)
(74) Vertreter: Kühn, Hans-Christian

(56) Entgegenhaltungen:
- DE-C1- 3 233 677
- FR-A- 2 021 890
- FR-A1- 2 546 625
- GB-A- 1 274 618
- JP-A- 11 304 669
- JP-A- 57 080 559
- JP-A- 2002 116 199
- US-A- 5 131 633
- US-A- 5 411 103
- US-A- 5 435 196

## Beschreibung

Die Erfindung betrifft eine Eintauchsonde mit einem eine Längsachse und eine die Längsachse umgebende äußere Oberfläche aufweisenden Sondenkörper, wobei ein Teil der äußeren Oberfläche sich in Umfangsrichtung um die Längsachse erstreckende Probennahmeelemente aufweist, die eine radiale Ausdehnung aufweisen.

Derartige Eintauchsonden sind aus US 5,435,196 bekannt. Hier ist eine Sonde zur Probennahme von Schlackeproben beschrieben. Der Sondenkörper weist ein Trägerrohr auf, um welches herum eine Ringstruktur aus zusammengerolltem Draht angeordnet ist. Die Ringstruktur ist in Längsrichtung beweglich, an ihr soll beim Eintauchen der Sonde in eine Metallschmelze die auf der Metallschmelze angeordnete Schlacke haften bleiben. Die Schlacke kann dann nach dem Herausziehen der Sonde aus der Schmelze analysiert werden. Abhängig von der Viskosität der Schlacke ist die anhaftende Menge mehr oder weniger groß, so dass auch unter Umständen zu wenig Schlacke für eine Analyse zur Verfügung steht.

Aus JP 14805/80 und JP 24456/74 sind ähnliche Probennehmer bekannt. In US 5131633 A wird ein stabförmiger Probennehmer beschrieben, bei dem die Schlackeprobe an der Mantelfläche des Stabes haften bleiben soll. Aus JP 11-304669 A ist ein weiterer Schlackeprobennehmer bekannt. Probennehmer für Bodenproben sind aus US-A-5 411 103 bekannt.

Der Erfindung liegt die Aufgabe zugrunde, die bekannten Eintauchsonden zu verbessern und eine effektive Schlackenprobennahme zu ermöglichen.

Die Erfindung wird gelöst durch die Merkmale des unabhängigen Anspruchs. Vorteilhafte Ausgestaltungen sind in den abhängigen Ansprüchen angegeben. Dadurch, dass um die Probennahmeelemente herum eine in Stahlschmelze oder Schlacke auflösbare oder verbrennbare Schutzschicht angeordnet ist, erreicht die zum Beispiel auf einer Stahlschmelze aufliegende Schlackeschicht die Probennahmeelemente erst mit einer gewissen Verzögerung. Dabei hat sich überraschenderweise gezeigt, dass gerade dadurch eine ausreichende Schlackemenge aufgenommen wird und somit eine ausreichend große Probe zur Analyse zur Verfügung gestellt werden kann. Die Schutzschicht verhindert, dass die Schlackeschmelze zu schnell an die Probennahmeelemente gelangt und diese beschädigen kann, bevor der Sondenkörper aus der Schlackeschmelze herausgezogen wurde. Insbesondere hat sich dies als vorteilhaft erwiesen bei Eintauchsonden, die zusätzlich Sensoren und/oder Probenkammern enthalten, da die damit erfolgende Messung oder Probennahme einige Sekunden länger dauert als die Entnahme der Schlackenprobe. Die Schutzschicht ist zweckmäßigerweise aus Pappe oder Papier ausgebildet. Insbesondere kann sie rohrförmig ausgebildet sein. Die Probennahmeelemente weisen eine dem Eintauchende des Sondenkörpers abgewandte ebene oder konkave Oberfläche auf. Dabei soll sich der ebene oder konkave Verlauf in radialer Richtung erstrecken. Die Probennahmeelemente können als die Längsachse umlaufende Scheiben oder in der Art eines Gewindes aus einem um die Längsachse gewundenen Band ausgebildet sein. Die ebene oder konkave Oberfläche ist zur Längsachse hin geneigt in Richtung des dem Eintauchende entgegengesetzten Endes des Sondenkörpers. Der dabei zwischen dieser Oberfläche und der Längsachse gebildete Winkel kann vorteilhafterweise etwa zwischen 45° und 90° betragen. Beim Eintauchen bzw. nach Auflösen der Schutzschicht fließt Schlacke auf diese Probennahmeelemente, haftet dort an und kann nach Herausziehen der Eintauchsonde aus der Schmelze abgenommen werden. Dazu werden die Probennahmeelemente zusammengedrückt, so dass die Schlacke abfällt. Sie wird dann granuliert und der Analyse zugeführt.

Zweckmäßigerweise sind die Probennahmeelemente aus Stahl, die Wandstärke kann weniger als 1 mm betragen. Die Probennahmeelemente sind vorteilhafterweise als separater Teil des Sondenkörpers ausgebildet und bestehen aus einem anderen Material als die übrige Teile des Sondenkörpers, also beispielsweise aus Stahl, während der übrige Teil des Sondenkörpers aus Pappe gebildet sein kann. Der Sondenkörper ist zweckmäßigerweise rohrförmig ausgebildet. An oder in ihm kann mindestens ein Sensor oder ein Probennehmer für Metallschmelze angeordnet sein. Die Probennahmeelemente sind als ein oder mehrere in Richtung der Längsachse hintereinander angeordnete Ringelemente auszubilden, wodurch eine leichtere Montage möglich wird.

Die Erfindung ist also **dadurch gekennzeichnet, dass** die Probennahmeelemente eine einem Eintauchende des Sondenkörpers abgewandte ebene oder konkave Oberfläche aufweisen, die zur Längsachse geneigt ist in Richtung des dem Eintauchende entgegengesetzten Ende des Sondenkörpers. Die Probennahmeelemente können auch für diese Ausführungsform vorzugsweise aus Stahl gebildet sein, sie können als separater Teil des Sondenkörpers aus einem anderen Material als der übrige Teil des Sondenkörpers ausgebildet sein und sie sind als ein oder mehrere in Richtung der Längsachse hintereinander angeordnete Ringelemente ausgebildet. Der übrige Teil des Sonderkörpers kann aus Pappe gebildet sein, wobei der Sondenkörper auch in dieser Ausbildungsform vorzugsweise rohrförmig ausgebildet ist.

Nachfolgend wird ein Ausführungsbeispiel der Erfindung an Hand einer Zeichnung näher erläutert. Es zeigen:

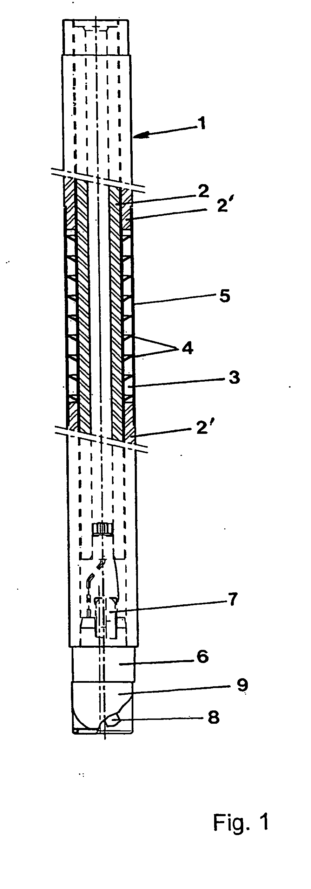

- Fig. 1: eine erfindungsgemäße Eintauchsonde im Schnitt,
- Fig. 2: eine Einzeldarstellung der Probennahmeelemente,
- Fig. 3: die Probennahmeelemente im Schnitt und
- Fig. 4: einen möglichen Aufbau der Probennahmeelemente.

Die Eintauchsonde weist einen Sondenkörper 1 auf, der aus zwei übereinander gesteckten Papprohren 2; 2' gebildet ist. Das äußere Papprohr 2' besteht aus zwei Teilen, die in Längsrichtung hintereinander angeordnet sind und zwischen sich einen Abstand aufweisen, so dass am Umfang des Sondenkörpers 1 eine breite Nut 3 entsteht. In dieser Nut 3 sind Probennahmeelemente 4 angeordnet. Die Probennahmeelemente 4 sind als flache Ringe ausgebildete, die nach oben angewinkelt sind, so dass sich in ihnen Schlacke sammeln kann. Um die Probennahmeelemente 4 herum ist eine etwa 1 bis 5 mm dicke Schutzschicht 5 aus Pappe angeordnet. Die Schutzschicht 5 löst sich beim Eintauchen der Eintauchsonde in die Schmelze auf, so dass Schlacke zu den Probennahmeelementen 3 gelangt und dort haften bleibt. Der Sondenkörper 1 weist ein Eintauchende auf, an dem ein Eintauchkopf 6 angeordnet ist. In dem Eintauchkopf 6 befindet sich eine Probenkammer 7 zur Entnahme von Proben der unter der Schlackeschicht angeordneten Stahlschmelze. Die Stahlschmelze fließt durch ein Einlaufrohr 8 in die Probenkammer 7 ein. Die Öffnung des Einlaufrohres 8 ist durch eine Pappkappe 9 geschützt. Diese Pappkappe 9 gibt die Einlauföffnung des Einlaufrohres 8 in der Stahlschmelze frei.

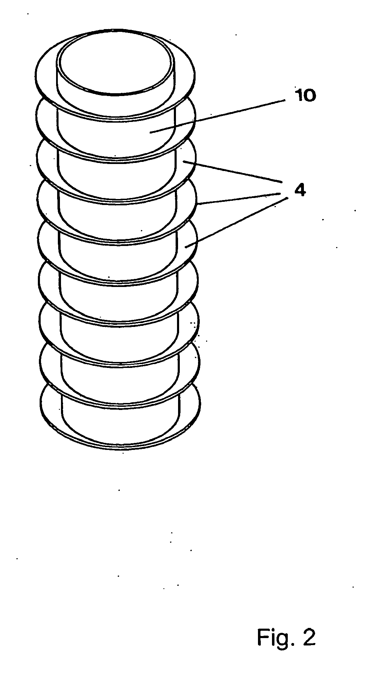

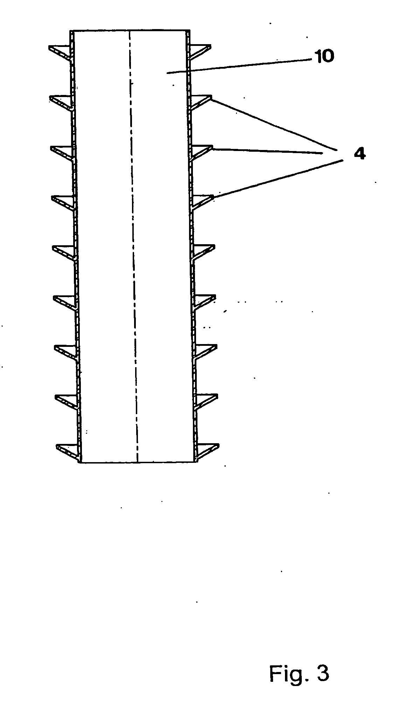

In Fig. 2 sind die Probennahmeelemente 4 dargestellt. Diese sind ringförmig hintereinander an einem Stahlrohr 10 angeordnet. Die Probennahmeelemente 4 selbst sind ebenfalls aus Stahl gebildet. Die Dicke (Wandstärke) der Probennahmeelemente 4 und des Stahlrohres 10 beträgt etwa 1 mm oder auch weniger. Die Probennahmeelemente 4 sind nach oben, also der Eintauchrichtung entgegengesetzt abgewinkelt. Sie bilden mit der Längsachse des Sondenkörpers 1 einen Winkel von etwa 60°. Nach der Probennahme wird der Sondenkörper 1 aus der Schmelze herausgezogen. Es wird ein radialer Druck auf die Probennahmeelemente 4 ausgeübt, so dass diese zerdrückt werden. Dabei fällt die sehr spröde Schlacke in grobkörniger Form von den Probennahmeelementen ab. Die Schlacke wird zerkleinert und einer Analyse zugeführt. Fig. 3 zeigt die Probennahmeelemente 4 im Schnitt.

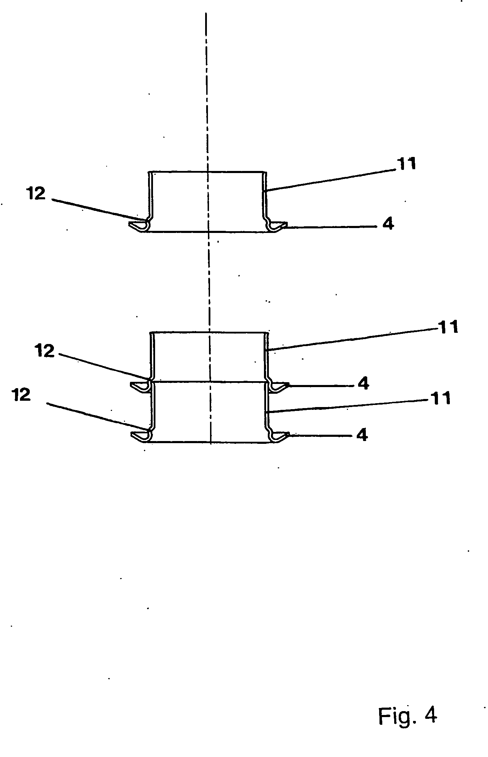

Fig. 4 zeigt eine weitere Möglichkeit der Konstruktion der Probennahmeelemente 4. Die Probennahmeelemente 4 sind als umlaufende flache Ringe ausgebildet als unterer Teil einer relativ kurzen Metallhülse 11, wobei sie durch Abbiegen aus der Metallhülse 11 entstanden sind. An der Biegestelle entsteht eine umlaufende Nut 12. Diese Nut 12 wird auf die Oberkante einer darunter angeordneten Metallhülse 11 aufgesteckt, so dass durch eine Übereinanderreihung mehrerer Segmente ein ähnlicher Probennahmekörper entsteht, wie er in Fig. 2 gezeigt ist.

## Patentansprüche

1. Eintauchsonde mit einem eine Längsachse und eine die Längsachse umgebende äußere Oberfläche und ein Eintauchende aufweisenden Sondenkörper, wobei ein Teil der äußeren Oberfläche sich in Umfangsrichtung um die Längsachse erstreckende Probennahmeelemente aufweist, die eine radiale Ausdehnung aufweisen, **dadurch gekennzeichnet, dass** die Probennahmeelemente (4) eine dem Eintauchende abgewandte ebene oder konkave Oberfläche aufweisen, die zur Längsachse geneigt ist in Richtung des dem Eintauchende entgegengesetzten Ende des Sondenkörpers (1) und dass die Probennahmeelemente (4) als ein oder mehrere in Richtung der Längsachse hintereinander angeordnete Ringelemente ausgebildet sind.

2. Eintauchsonde nach Anspruch 1, **dadurch gekennzeichnet, dass** die Probennahmeelemente (4) aus Stahl gebildet sind.

3. Eintauchsonde nach Anspruch 1 oder 2, **dadurch gekennzeichnet, dass** die Probennahmeelemente (4) als separater Teil des Sondenkörpers (1) und aus einem anderen Material als der übrige Teil des Sondenkörpers (1) ausgebildet sind.

4. Eintauchsonde nach einem der Ansprüche 1 bis 3, **dadurch gekennzeichnet, dass** der übrige Teil des Sonderkörpers (1) aus Pappe gebildet ist.

5. Eintauchsonde nach einem der Ansprüche 1 bis 4, **dadurch gekennzeichnet, dass** der Sondenkörper (1) rohrförmig ausgebildet ist.

6. Eintauchsonde nach einem der Ansprüche 1 bis 5, **dadurch gekennzeichnet, dass** um die Probennahmeelemente (4) herum eine in Stahlschmelze oder Schlacke auflösbare oder verbrennbare Schutzschicht (5) angeordnet ist.

7. Eintauchsonde nach Anspruch 6, **dadurch gekennzeichnet, dass** die Schutzschicht (5) aus Pappe oder Papier ausgebildet ist.

8. Eintauchsonde nach Anspruch 6 oder 7, **dadurch gekennzeichnet, dass** die Schutzschicht (5) rohrförmig ausgebildet ist.

9. Eintauchsonde nach einem der Ansprüche 1 bis 8, **dadurch gekennzeichnet, dass** an oder in dem Sondenkörper (1) mindestens ein Sensor oder eine Probenkammer (7) angeordnet ist.

## Claims

1. An immersion probe having a probe body which comprises a longitudinal axis and an external surface surrounding said longitudinal axis and further comprises an immersion end, wherein a part of the external surface comprises sampling elements extending circumferentially around the longitudinal axis and comprising a radial dimension, **characterised in that** the sampling elements (4) comprise a flat or concave surface facing away from the immersion end and being inclined in relation to the longitudinal axis in the direction of that end of the probe body (1) that is arranged opposite to the immersion end and that the sampling elements (4) are formed as one or more ring elements arranged consecutively in the direction of the longitudinal axis.

2. The immersion probe according to Claim 1, **characterised in that** the sampling elements (4) are made of steel.

3. The immersion probe according to Claim 1 or 2, **characterised in that** the sampling elements (4) are formed as a separate part of the probe body (1) and are made of a material differing from that of the remaining part of the probe body (1).

4. The immersion probe according to anyone of Claims 1 to 3, **characterised in that** the remaining part of the probe body (1) is made of cardboard.

5. The immersion probe according to anyone of Claims 1 to 4, **characterised in that** the probe body (1) has a tubular shape.

6. The immersion probe according to anyone of Claims 1 to 5, **characterised in that** a protective layer (5) dissolvable or combustible in molten steel or slag is arranged around the sampling elements (4).

7. The immersion probe according to Claim 6, **characterised in that** the protective layer (5) is made of cardboard or paper.

8. The immersion probe according to Claim 6 or 7, **characterised in that** the protective layer (5) has a tubular shape.

9. The immersion probe according to anyone of Claims 1 to 8, **characterised in that** at least one sensor or one sample chamber (7) is arranged on or in the probe body (1).

## Revendications

1. Sonde à immersion comportant un corps de sonde présentant un axe longitudinal et une surface extérieure entourant l'axe longitudinal et une extrémité d'immersion, une partie de la surface extérieure présentant des éléments de prélèvement d'échantillons s'étendant autour de l'axe longitudinal en direction périphérique, qui présentent une extension radiale, **caractérisée en ce que** les éléments de prélèvement d'échantillons (4) présentent une surface plane ou concave détournée de l'extrémité d'immersion, qui est inclinée vers l'axe longitudinal en direction de l'extrémité du corps de sonde (1), qui est opposée à l'extrémité d'immersion, et **en ce que** les éléments de prélèvement d'échantillons (4) sont réalisés sous forme d'un ou de plusieurs éléments annulaires agencés les uns derrière les autres en direction de l'axe longitudinal.

2. Sonde à immersion selon la revendication 1, **caractérisée en ce que** les éléments de prélèvement d'échantillons (4) sont réalisés en acier.

3. Sonde à immersion selon la revendication 1 ou 2, **caractérisée en ce que** les éléments de prélèvement d'échantillons (4) sont réalisés sous forme de partie séparée du corps de sonde (1) et à partir d'un autre matériau que la partie restante du corps de sonde (1).

4. Sonde à immersion selon l'une des revendications 1 à 3, **caractérisée en ce que** la partie restante du corps de sonde (1) est réalisée en carton.

5. Sonde à immersion selon l'une des revendications 1 à 4, **caractérisée en ce que** le corps de sonde (1) est réalisé en forme de tube.

6. Sonde à immersion selon l'une des revendications 1 à 5, **caractérisée en ce qu'**autour des éléments de prélèvement d'échantillons (4) est agencée une couche de protection (5) dissoluble dans de l'acier en fusion ou dans du laitier ou combustible.

7. Sonde à immersion selon la revendication 6, **caractérisée en ce que** la couche de protection (5) est réalisée en carton ou en papier.

8. Sonde à immersion selon la revendication 6 ou 7, **caractérisée en ce que** la couche de protection (5) est réalisée en forme de tube.

9. Sonde à immersion selon l'une des revendications 1 à 8, **caractérisée en ce que** sur ou dans le corps de sonde (1) est agencé au moins un capteur ou une chambre à échantillons (7).
